(19) Europäisches Patentamt
European Patent Office
Office européen des brevets

(11) **EP 4 031 621 B1**

(12) **FASCICULE DE BREVET EUROPEEN**

(45) Date de publication et mention de la délivrance du brevet:
**18.03.2026 Bulletin 2026/12**

(21) Numéro de dépôt: **20772304.0**

(22) Date de dépôt: **17.09.2020**

(51) Classification Internationale des Brevets (IPC):
***C08L 47/00*** (2006.01) ***C08K 3/04*** (2006.01)
***C08K 3/36*** (2006.01) ***C08F 210/02*** (2006.01)
***B60C 1/00*** (2006.01)

(52) Classification Coopérative des Brevets (CPC):
(C-Sets disponibles)
**C08F 210/02; B60C 1/00; C08L 47/00** (Cont.)

(86) Numéro de dépôt international:
**PCT/EP2020/075933**

(87) Numéro de publication internationale:
**WO 2021/053051 (25.03.2021 Gazette 2021/12)**

(54) **TERPOLYMÈRE D'ÉTHYLÈNE ET DE 1,3-DIÈNES**

TERPOLYMER AUS ETHYLEN UND 1,3-DIENEN

TERPOLYMER OF ETHYLENE AND 1,3-DIENES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2019 FR 1910303**

(43) Date de publication de la demande:
**27.07.2022 Bulletin 2022/30**

(73) Titulaire: **COMPAGNIE GENERALE DES ETABLISSEMENTS MICHELIN**
**63000 Clermont-Ferrand (FR)**

(72) Inventeurs:
- **MORESO, Emma**
  **63040 CLERMONT-FERRAND Cedex 9 (FR)**
- **LAFAQUIERE, Vincent**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2018/189456** **WO-A1-2019/012009**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC): (Cont.)

C-Sets
**C08F 210/02, C08F 4/52;**
**C08F 210/02, C08F 4/54;**
C08F 210/02, C08F 236/06;
C08F 210/02, C08F 236/06, C08F 236/22, C08F 2500/36;
C08F 210/02, C08F 236/22, C08F 236/06, C08F 2500/36

## Description

Le domaine de l'invention est celui des copolymères de diènes conjugués et d'éthylène, riches en unité éthylène et utilisables en tant qu'élastomères dans une composition de caoutchouc pour pneumatique.

Les élastomères diéniques les plus largement utilisés dans la confection des pneumatiques sont les polybutadiènes, les polyisoprènes, en particulier le caoutchouc naturel, et les copolymères de 1,3-butadiène et de styrène. Le point commun à ces élastomères est la forte proportion molaire d'unités diéniques dans l'élastomère, généralement très supérieure à 50%, ce qui peut les rendre sensibles à l'oxydation, notamment sous l'action de l'ozone.

La Demanderesse a décrit des élastomères qui a contrario sont relativement pauvres en unités diéniques, notamment en vue de réduire leur sensibilité aux phénomènes d'oxydation. Ces élastomères sont par exemple décrits dans le document WO 2007054223. Ce sont des copolymères de 1,3-butadiène et d'éthylène contenant plus de 50% en mole d'unité éthylène. Ces élastomères sont qualifiés d'élastomères diéniques riches en éthylène.

Les copolymères de 1,3-butadiène et d'éthylène riches en éthylène sont cristallins et voient leur cristallinité augmenter avec le taux d'éthylène. La présence de parties cristallines dans le copolymère peut être problématique lorsqu'on utilise le copolymère dans une composition de caoutchouc. La fusion des parties cristallines du copolymère entraînant une baisse de sa rigidité, une composition de caoutchouc contenant un tel copolymère voit aussi sa rigidité diminuer lorsqu'elle est portée à des températures égalant ou dépassant la température de fusion des parties cristallines, Cette dépendance de la rigidité en fonction de la température peut donc entraîner des fluctuations des propriétés de la composition de caoutchouc et la rendre moins appropriée pour certains usages qui requièrent une meilleure stabilité des propriétés en température. Il est d'intérêt de disposer de polymères diéniques riches en unités éthylène dont la cristallinité est réduite, voire supprimée.

Dans le document WO 2007054224, la Demanderesse a décrit des copolymères diéniques riches en éthylène qui présentent une cristallinité réduite. Ces copolymères sont des copolymères de 1,3-butadiène et d'éthylène qui contiennent en outre des motifs cycliques hydrocarbonés saturés à 6 membres. Néanmoins, ces copolymères introduits dans une composition de caoutchouc peuvent conférer une rigidité trop élevée à la composition de caoutchouc. La rigidité élevée de la composition de caoutchouc est imputée à une rigidité également élevée de l'élastomère. Une rigidité élevée d'une composition de caoutchouc peut être problématique, car elle peut, elle aussi, rendre la composition de caoutchouc inappropriée pour certaines applications.

Poursuivant son but de synthétiser des élastomères diéniques riches en éthylène, la Demanderesse a découvert un nouveau polymère qui permet de résoudre les problèmes mentionnés, notamment en présentant un compromis amélioré ente le taux d'éthylène, la rigidité et le taux de cristallinité pour une utilisation en pneumatique.

Ainsi un premier objet de l'invention est un terpolymère, de préférence élastomère, d'éthylène, d'un premier 1,3-diène ayant 4 à 6 atomes de carbone et d'un deuxième 1,3-diène de formule (I), lequel terpolymère contient plus de 50% en mole d'unités éthylène et au moins 1% en mole d'unités du deuxième 1,3-diène,

$$CH_2=CR-CH=CH_2 \qquad (I)$$

le symbole R représentant une chaîne hydrocarbonée ayant 3 à 20 atomes de carbone.

Un deuxième objet de l'invention est un procédé pour préparer le terpolymère conforme à l'invention.

L'invention concerne également une composition de caoutchouc comprenant un terpolymère conforme à l'invention, une charge renforçante et un système de réticulation, lequel terpolymère est un élastomère.

L'invention concerne aussi un pneumatique qui comprend une composition de caoutchouc conforme à l'invention.

## Description détaillée

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties en poids d'élastomère (du total des élastomères si plusieurs élastomères sont présents).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un copolymère sont exprimés en pourcentage molaire par rapport à la totalité des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Le premier 1,3-diène a pour caractéristique essentielle de contenir 4 à 6 atomes de carbone. Le premier 1,3-diène est un seul composé c'est-à-dire un seul (en anglais « one ») 1,3-diène ayant 4 à 6 atomes de carbone ou est un mélange de différents 1,3-diènes ayant 4 à 6 atomes de carbone. A titre de 1,3-diène ayant 4 à 6 atomes de carbone, on peut citer en particulier le 1,3-butadiène et l'isoprène. Le premier 1,3-diène est préférentiellement le 1,3-butadiène.

Le deuxième 1,3-diène a pour caractéristique essentielle de répondre à la formule (I) dans laquelle le symbole R représentant une chaîne hydrocarbonée ayant 3 à 20 atomes de carbone.

$$CH_2=CR-CH=CH_2 \qquad (I)$$

Le deuxième 1,3-diène est un seul composé, c'est-à-dire un seul (en anglais « one ») 1,3-diène de formule (I) ou est un mélange de 1,3-diènes de formule (I), les 1,3-diènes du mélange se différenciant les uns des autres par le groupe représenté par le symbole R.

De préférence, le symbole R représente une chaîne hydrocarbonée ayant 6 à 16 atomes de carbone. La chaîne hydrocarbonée représentée par le symbole R peut être une chaîne saturée ou insaturée. De préférence, le symbole R représente une chaîne aliphatique auquel cas dans la formule (I) du 1,3-diène, la chaîne hydrocarbonée représentée par le symbole R est une chaîne hydrocarbonée aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Mieux, le symbole R représente une chaîne hydrocarbonée acyclique insaturée et ramifiée. La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène ou le β-farnésène. Selon un mode de réalisation préférentiel de l'invention, le 1,3-diène est le myrcène.

Selon un autre mode de réalisation préférentiel de l'invention, le 1,3-diène est le β-farnésène.

Le terpolymère conforme à l'invention est un terpolymère d'éthylène, d'un premier 1,3-diène et d'un deuxième 1,3-diène, ce qui implique que les unités monomères du terpolymère sont des unités résultant de la polymérisation de l'éthylène, du premier 1,3-diène et du deuxième 1,3-diène. Le copolymère comprend donc des unités éthylène, des unités du premier 1,3-diène et des unités du deuxième 1,3-diène.

Le deuxième 1,3-diène étant un 1,3 diène substitué, sa polymérisation peut donner lieu à des unités de configuration 1,2 représentée par la formule (1), de configuration 3,4 représentée par la formule (2) et de configuration 1,4 dont la forme trans est représentée ci-après par la formule (3).

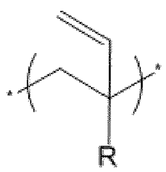

(1)

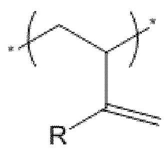

(2)

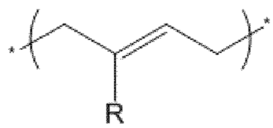

(3)

De manière bien connue, le premier 1,3-diène peut donner lieu à des unités 1,3-diène qui sont des unités de configuration 1,2 ou 3,4 comme c'est le cas par exemple de l'isoprène et des unités de configuration 1,4.

De manière également bien connue, l'unité éthylène est une unité de motif $-(CH_2-CH_2)-$.

Le terpolymère conforme à l'invention est avantageusement un terpolymère statistique selon l'un quelconque des modes de réalisation de l'invention. Très avantageusement, le terpolymère est un polymère atactique selon l'un quelconque des modes de réalisation de l'invention.

Selon l'invention, le terpolymère contient plus de 50% en mole d'unités éthylène. De préférence, le terpolymère contient plus de 60% en mole d'unités éthylène. De manière plus préférentielle, il contient au moins 70% en mole d'unités éthylène.

Le terpolymère contient préférentiellement au plus 90% en mole des unités éthylène, plus préférentiellement au plus 85% en mole des unités éthylène.

Selon l'invention, le terpolymère contient au moins 1% en mole d'unités du deuxième 1,3-diène. De préférence, le terpolymère contient au plus 20% en mole d'unités du deuxième 1,3-diène. De manière plus préférentielle, le terpolymère contient au plus 10% en mole d'unités du deuxième 1,3-diène.

Selon un mode de réalisation de l'invention, le terpolymère contient plus de 60% à 90% en mole d'unités éthylène et de 1% à 20%, préférentiellement de 1% à 10% en mole d'unités du deuxième 1,3-diène. Selon ce mode de réalisation de l'invention, le terpolymère contient préférentiellement moins de 30% en mole d'unités du premier 1,3-diène ou contient

préférentiellement moins de 20% en mole d'unités du premier 1,3-diène.

Selon un autre mode de réalisation de l'invention, le terpolymère contient de 70% à 90% en mole d'unités éthylène et de 1% à 20%, préférentiellement de 1% à 10% en mole d'unités du deuxième 1,3-diène. Selon ce mode de réalisation de l'invention, le terpolymère contient préférentiellement moins de 20% en mole d'unités du premier 1,3-diène.

Selon encore un autre mode de réalisation de l'invention, le terpolymère contient plus de 60% à 85% en mole d'unités éthylène et de 1% à 20%, préférentiellement de 1% à 10% en mole d'unités du deuxième 1,3-diène. Selon ce mode de réalisation de l'invention, le terpolymère contient préférentiellement moins de 30% en mole d'unités du premier 1,3-diène ou contient préférentiellement moins de 20% en mole d'unités du premier 1,3-diène.

Selon encore un autre mode de réalisation de l'invention, le terpolymère contient de 70% à 85% en mole d'unités éthylène et de 1% à 20%, préférentiellement de 1% à 10% en mole d'unités du deuxième 1,3-diène. Selon ce mode de réalisation de l'invention, le terpolymère contient préférentiellement moins de 20% en mole d'unités du premier 1,3-diène.

Selon l'un quelconque des modes de réalisation de l'invention, le terpolymère contient préférentiellement moins de 80% en mole d'unité éthylène, plus préférentiellement au plus 75% en mole d'unité éthylène.

Selon un mode de réalisation particulier de l'invention, en particulier lorsque le premier 1,3-diène est le 1,3-butadiène ou un mélange de 1,3-diènes dont un est le 1,3-butadiène, le terpolymère contient en outre des unités de motif 1,2-cyclohexanediyle. La présence de ces structures cycliques dans le terpolymère résulte d'une insertion très particulière de l'éthylène et de 1,3-butadiène lors de la polymérisation. La teneur en unités de motif 1,2-cyclohexanediyle dans le terpolymère varie selon les teneurs respectives en éthylène et en 1,3-butadiène dans le terpolymère. Le terpolymère contient de préférence moins de 15% en mole d'unités de motif 1,2-cyclohexanediyle.

De préférence, le terpolymère conforme à l'invention a une température de transition vitreuse inférieure à -35°C, préférentiellement comprise entre -70°C et -35°C.

Le terpolymère peut être préparé par un procédé, autre objet de l'invention, qui comprend la polymérisation d'un mélange d'éthylène, du premier 1,3-diène et du deuxième 1,3-diène en présence d'un système catalytique à base au moins d'un métallocène de formule (II) et d'un organomagnésien de formule (III)

$$P(Cp^1Cp^2)\ Nd(BH_4)_{(1+y)}\text{-}L_y\text{-}N_x \qquad (II)$$

$$MgR^1R^2 \qquad (III)$$

$Cp^1$ et $Cp^2$, identiques ou différents, étant choisis dans le groupe constitué par le groupe cyclopentadiényle de formule $C_5H_4$, le groupe fluorényle non substitué de formule $C_{13}H_8$ et les groupes fluorényles substitués,

P étant un groupe pontant les deux groupes $Cp^1$ et $Cp^2$ et représentant un groupe $ZR^3R^4$, Z représentant un atome de silicium ou de carbone, $R^3$ et $R^4$, identiques ou différents, représentant chacun un groupe alkyle comprenant de 1 à 20 atomes de carbone, de préférence un méthyle,

y, nombre entier, étant égal ou supérieur à 0,

x, nombre entier ou non, étant égal ou supérieur à 0,

L représentant un métal alcalin choisi dans le groupe constitué par le lithium, le sodium et le potassium,

N représentant une molécule d'un éther, de préférence diéthyléther ou tétrahydrofuranne, $R^1$ et $R^2$, identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

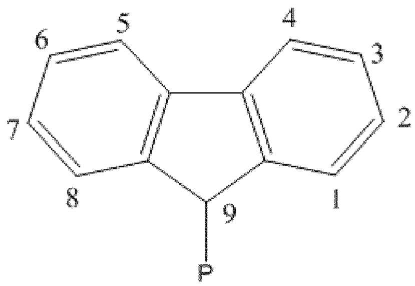

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule $MgR^1R^2$ dans laquelle $R^1$ et $R^2$, identiques ou différents, représentent un groupe carboné. On entend par groupe carboné un groupe qui contient un ou plusieurs atomes de carbone. De préférence, $R^1$ et $R^2$ contiennent 2 à 10 atomes de carbone. De manière plus préférentielle, $R^1$ et $R^2$ représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de polymères de masses molaires élevées.

Lorsque le terpolymère est un polymère qui comprend des unités de motif 1,2-cyclohexanediyle, il est préparé selon le procédé mentionné dans la présente demande en utilisant un métallocène de formule (II) dans laquelle $Cp^1$ et $Cp^2$, identiques ou différents, sont choisis dans le groupe constitué par les groupes fluorényles substitués et le groupe fluorényle non substitué de formule $C_{13}H_8$. Pour cette variante, conviennent en particulier les métallocènes de formules suivantes dans lesquelles le symbole Flu présente le groupe fluorényle de formule $C_{13}H_8$ : $[\{Me_2SiFlu_2Nd(\mu\text{-}BH_4)_2Li(THF)\}_2]$ ; $[Me_2SiFlu_2Nd(\mu\text{-}BH_4)_2Li(THF)]$ ; $[Me_2SiFlu_2Nd(\mu\text{-}BH_4)(THF)]$ ; $[\{Me_2SiFlu_2Nd(\mu\text{-}BH_4)(THF)\}_2]$ ; $[Me_2SiFlu_2Nd(\mu\text{-}BH_4)]$.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la polymérisation ainsi que la manipulation des monomères, du système catalytique et du ou des solvants de polymérisation se font dans des

conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène et des 1,3-diènes dans un réacteur de polymérisation, un ajout continu d'éthylène et des 1,3-diènes peut être réalisé dans le réacteur de polymérisation, auquel cas le réacteur de polymérisation est un réacteur alimenté. Ce mode de réalisation est tout particulièrement adapté pour la synthèse de terpolymère statistique.

La polymérisation peut être stoppée par refroidissement du milieu de polymérisation ou par ajout d'un alcool. Le polymère peut être récupéré selon les techniques classiques connues de l'homme du métier comme par exemple par précipitation, par évaporation du solvant sous pression réduite ou par stripping à la vapeur d'eau.

Alternativement au lieu d'ajouter un alcool, on peut ajouter un agent de fonctionnalisation, auquel cas il est récupéré un polymère portant une fonction telle qu'une fonction amine, une fonction silanol ou une fonction alcoxysilane. Selon un mode réalisation particulier de l'invention, le terpolymère porte une fonction amine, alcoxysilane ou silanol.

Selon une première variante dans laquelle la fonction portée par le polymère est une fonction amine, l'agent de fonctionnalisation est de préférence un composé de formule (IV),

$$Si(Fc^1)_{3-g}\,(Rc^2)_g(Rca) \qquad (IV)$$

les symboles $Fc^1$, identiques ou différents, représentant un groupe alcoxy,
les symboles $Rc^2$, identiques ou différents, représentant un atome d'hydrogène ou une chaîne hydrocarbonée,
le symbole Rca représentant une chaîne hydrocarbonée substituée par une fonction amine, g étant un nombre entier allant de 0 à 1.

Le groupe alcoxy représenté par le symbole $Fc^1$ dans la formule (IV) est de préférence méthoxy ou éthoxy.

La fonction amine désignée dans le symbole Rca dans la formule (IV), à savoir la fonction amine de l'agent de fonctionnalisation est une fonction amine primaire protégée, une fonction amine secondaire protégée ou une fonction amine tertiaire. Comme groupes protecteurs des fonctions amine primaire et amine secondaire, on peut citer les groupes silyles, par exemple les groupes triméthylsilyle et terbutyldiméthylsilyle. De préférence, la fonction amine de l'agent de fonctionnalisation est une fonction amine tertiaire. Avantageusement, la fonction amine de l'agent de fonctionnalisation est une amine tertiaire de formule $-N(R_B)_2$ dans laquelle chaque $R_B$ représente un alkyle, préférentiellement un méthyle ou un éthyle.

A titre d'agent de fonctionnalisation pour préparer un polymère portant une fonction amine selon la première variante, on peut citer les composés (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, (N,N-diméthylaminopropyl)triméthoxysilane, (N,N-diméthylaminopropyl)triéthoxysilane et (N-(3-triméthoxysilyl)propyl)-N-(triméthylsilyl)silanamine, (N-(3-triéthoxysilyl)propyl)-N-(triméthyl-silyl)silanamine, de préférence (N,N-diméthyl-3-aminopropyl)méthyldiméthoxysilane, (N,N-diméthyl-3-aminopropyl)éthyldiméthoxysilane, (N,N-diméthylaminopropyl)triméthoxysilane et (N-(3-triméthoxysilyl)-propyl)-N-(triméthylsilyl)silanamine, de manière plus préférentielle (N,N-diméthylaminopropyl)triméthoxysilane et (N-(3-triméthoxysilyl)propyl)-N-(triméthylsilyl)-silanamine.

Selon une deuxième variante dans laquelle la fonction portée par le polymère est une fonction silanol ou alcoxysilane, l'agent de fonctionnalisation est de préférence un composé de formule (V),

$$Si(Fc^1)_{4-g}\,(Rc^2)_g \qquad (V)$$

les symboles $Fc^1$, identiques ou différents, représentant un groupe alcoxy ou un atome d'halogène,
les symboles $Rc^2$, identiques ou différents, représentant un atome d'hydrogène, une chaîne hydrocarbonée ou une chaîne hydrocarbonée substituée par une fonction chimique $Fc^2$,
g étant un nombre entier allant de 0 à 2.

Lorsque le symbole $Fc^1$ représente un groupe alcoxy dans la formule (V), le groupe alcoxy est de préférence méthoxy ou éthoxy. Lorsque le symbole $Fc^1$ représente un atome d'halogène dans la formule (V), l'atome d'halogène est

de préférence le chlore.

Parmi les chaînes hydrocarbonées représentée par les symboles $Rc^2$ dans les formules (V), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique $Fc^2$ qui sont représentée par les symboles $Rc^2$ dans les formules (V), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique $Fc^2$, autrement dit, une valence de la chaîne alcanediyle pour la fonction $Fc^2$, l'autre valence pour l'atome de silicium de la fonction méthoxysilane.

Dans les formules (V), on entend par fonction chimique un groupe qui est différent d'un groupe hydrocarboné saturé et qui peut participer à des réactions chimiques. L'homme du métier comprend que la fonction chimique $Fc^2$ dans la formule (V) est un groupe chimiquement inerte vis-à-vis des espèces chimiques présentes dans le milieu de polymérisation. La fonction chimique $Fc^2$ dans la formule (V) peut être sous une forme protégée, comme par exemple dans le cas de la fonction amine primaire, amine secondaire ou thiol. A titre de fonction chimique $Fc^2$, peuvent être citées les fonctions éther, thioéther, amine primaire protégée, amine secondaire protégée, amine tertiaire, thiol protégé, silyle. De préférence, la fonction chimique $Fc^2$ dans la formule (V) est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

A titre d'agent de fonctionnalisation pour préparer un polymère portant une fonction silanol ou alcoxysilane selon la deuxième variante, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxy-méthylsilane, triéthoxyméthylsilane, triméthoxyéthylsilane, triéthoxyéthylsilane, (N,N-diméthylaminopropyl)triméthoxysilane, le (N,N-diméthylaminopropyl) triéthoxysilane, (N-(3-triméthoxysilyl)propyl)-N-(triméthylsilyl)silanamine, (N-(3-triéthoxysilyl)propyl)-N-(triméthyl-silyl) silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

Qu'il s'agisse de la première ou de la deuxième variante, l'agent de fonctionnalisation est ajouté typiquement au milieu de polymérisation. Il est typiquement ajouté au milieu de polymérisation à un taux de conversion des monomères choisi par l'homme du métier selon la macrostructure souhaitée du copolymère. L'étape de polymérisation étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur. L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Lorsque l'agent de fonctionnalisation porte une fonction protégée telle que décrite précédemment, l'étape de fonctionnalisation du polymère peut être suivie d'une réaction d'hydrolyse pour former un copolymère portant une fonction déprotégée, comme une amine primaire, une amine secondaire ou une fonction thiol.

Une réaction d'hydrolyse peut également suivre la réaction de fonctionnalisation du polymère lorsque la réaction de fonctionnalisation conduit à la formation d'un polymère portant une fonction alcoxysilane. L'hydrolyse du polymère portant une fonction alcoxysilane conduit à la préparation d'un polymère portant une fonction silanol.

Le terpolymère conforme à l'invention, décrit selon l'un quelconque des modes de réalisation de l'invention, y compris sous leurs variantes préférentielles, présente à la fois une rigidité plus faible et un taux de cristallinité comparable, voire plus faible qu'un copolymère d'éthylène et de 1,3-butadiène qui présente pourtant le même taux d'éthylène. La substitution dans une composition de caoutchouc du terpolymère conforme à l'invention à un copolymère d'éthylène et de 1,3-butadiène qui présente pourtant le même taux d'éthylène permet de conférer à une composition de caoutchouc une rigidité plus faible. Le terpolymère conforme à l'invention est avantageusement un élastomère. Il est en particulier destiné à être utilisé dans une composition de caoutchouc, notamment pour pneumatique.

La composition de caoutchouc, autre objet de l'invention, a pour caractéristique de comprendre l'élastomère

conforme à l'invention, une charge renforçante et un système de réticulation.

La composition de caoutchouc peut comprendre tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. Le taux de charge renforçante est ajusté par l'homme du métier en fonction de l'usage de la composition de caoutchouc.

Le système de réticulation peut être à base de soufre, de donneurs de soufre, de peroxydes, de bismaléimides ou de leurs mélanges. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemple

1) Détermination de la macrostructure des polymères par chromatographie d'exclusion stérique (SEC) :

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (*Đ* = Mw/Mn) peuvent également être calculées.

b) Préparation du polymère :

Chaque échantillon est solubilisé dans du tétrahydrofurane à une concentration d'environ 1 g/L. Puis la solution est filtrée sur filtre de porosité 0.45μm avant injection.

c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI

dépend de la concentration de l'échantillon, de la constante du détecteur RI et de la valeur du dn/dc. Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min$^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 $\mu$L. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

2) Détermination de la microstructure des polymères :

a) Détermination de la microstructure des terpolymères Ethylène-Butadiène-Myrcène :

La caractérisation spectrale et les mesures de la microstructure de copolymère Ethylène-Butadiène-Myrcène sont réalisées par spectroscopie de Résonance Magnétique Nucléaire (RMN).

Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétition de 128 et un nombre d'incréments de 128. Les expériences sont réalisées à 25 °C.

25 mg d'échantillon sont solubilisés dans 1 mL d'orthodichlorobenzène deutéré (ODCB).

Les axes des déplacements chimiques 1H et 13C sont calibrés par rapport à l'impureté protonée du solvant à $\delta$1H = 7,2 ppm (pour le signal le plus déblindé) et $\delta$13C = 127 ppm (pour le signal le moins déblindé).

Les unités monomères possibles dans le terpolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R_2$ représentant la chaine polymère :

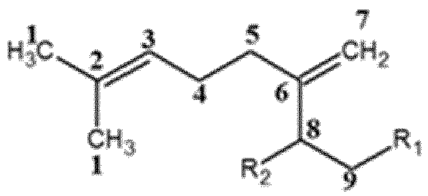

A

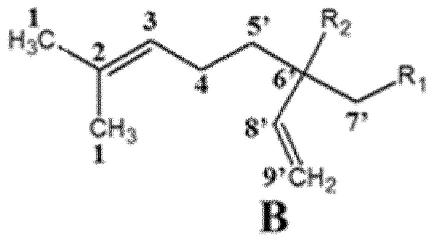

B

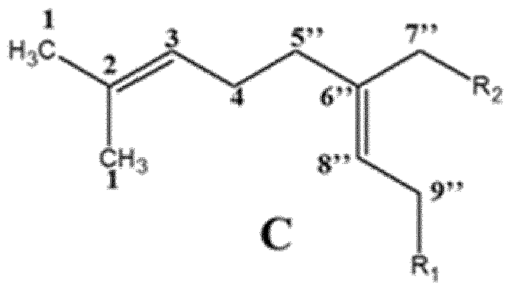

C

Le motif 1,2-cyclohexanediyle est de structure suivante :

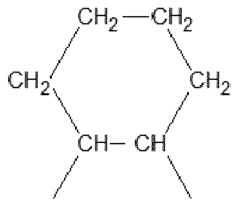

Les signaux des formes d'insertion du myrcène A ont été observés sur les différents spectres enregistrés. D'après S. Georges *et al.* (S.Georges, M.Bria, P. Zinck and M. Visseaux. Polymer 55 (2014) 3869-3878), le signal du groupement -CH= n°8" caractéristique de la forme C présente des déplacements chimiques $^{1}H$ et $^{13}C$ identiques au groupement -CH= n°3.

Les déplacements chimiques des signaux caractéristiques du polymère sont présentés dans le tableau 1 (Attribution des signaux $^{1}H$ et $^{13}C$ des terpolymères Ethylène-Butadiène-Myrcène autres que ceux des unités du 1,3-butadiène).

Tableau 1

| δ1H (ppm) | δ13C (ppm) | Groupement |
|---|---|---|
| 5.19 | 125.1 | 3 + 8" |
| 4.86 | 109.0 | 7 |
| 1.59 et 1.68 | 247 et 17.6 | 1 |
| 1.3 | 37.5 - 24.0 | CH2 éthylène |

Les quantifications ont été effectuées à partir de l'intégration des spectres RMN 1D $^{1}H$ à l'aide du logiciel Topspin.

Les signaux intégrés pour la quantification des différents motifs sont :

Ethylène : Totalité des signaux entre 0.5 ppm et 3.0 ppm en soustrayant les contributions aliphatiques des autres motifs du terpolymère. Le calcul correspond à 4 protons du motif Ethylène.
Forme A : signal n°7 (4.86 ppm) correspondant à 2 protons.

La proportion de forme C n'est pas accessible directement mais peut être calculée à partir du signal n°3+8" en soustrayant la contribution de la forme A.

PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane : signal entre 1.80 ppm et 1.70 ppm correspond à 2 protons.

La quantification de la microstructure est réalisée en pourcentage molaire (% molaire) comme suit :

$$\text{\% molaire d'un motif} = \text{intégrale } ^{1}\text{H d'un motif} * 100 / \Sigma \text{ (intégrale } ^{1}\text{H de chaque motif).}$$

b) Détermination de la microstructure des terpolymères éthylène-butadiène-farnésène :

La caractérisation spectrale et les mesures de la microstructure de copolymère Ethylène-butadiène-farnésène sont réalisées par spectroscopie de Résonance Magnétique Nucléaire (RMN). Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétition de 128 et un nombre d'incréments de 128. Les expériences sont réalisées à 25 °C. 25 mg d'échantillon sont solubilisés dans 1 mL d'orthodichlorobenzène deutéré (ODCB). Les axes des déplacements chimiques $^{1}H$ et $^{13}C$ sont calibrés par rapport à l'impureté protonée du solvant à $\delta_{1H}$ = 7,2 ppm (pour le signal le plus déblindé) et $\delta_{13C}$ = 127 ppm (pour le signal le moins déblindé).

Les unités monomères possibles dans le terpolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R_2$ représentant la chaine polymère :

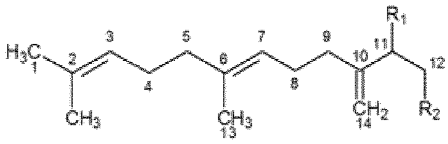

**A**

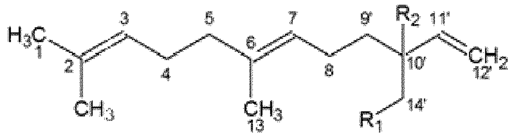

**B**

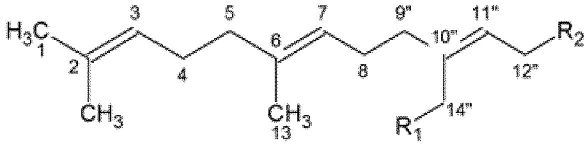

**C**

Les signaux de la forme d'insertion du farnésène A ont été observés sur les différents spectres enregistrés. Le signal du groupement -CH= n°11" caractéristique de la forme C présente des déplacements chimiques $^{1}H$ et $^{13}C$ identiques aux groupements -CH= n°3 et n°7.

Les déplacements chimiques des signaux caractéristiques du polymère sont présentés dans le tableau 2 (Attribution des signaux $^{1}H$ et $^{13}C$ des terpolymères Ethylène-Butadiène-Farnesène autres que ceux des unités du 1,3-butadiène).

Tableau 2

| (ppm) | δ13C (ppm) | Groupement |
|---|---|---|
| 5.25 | 125.0 | 7 |
| 5.15 | 125.0 | 3, 11" |
| 4.87 | 109.0 | 14 |
| 1.59 et 1.67 | 24.6 et 17.5 | 1, 13 |
| 1.28 | 38 - 24.0 | CH2 éthylène |

Les quantifications ont été effectuées à partir de l'intégration des spectres RMN 1D $^{1}H$ à l'aide du logiciel Topspin.

Les signaux intégrés pour la quantification des différents motifs sont :

Motif farnesène forme A à partir du signal **n°14 $CH_2$=** pour 2 protons,
Motif farnesène forme C à partir des signaux **n°3,11" et n°7 CH=** (en soustrayant la contribution de la forme A), pour 2 protons,
Motif farnesène forme B : à partir du signal n°11', propre à cette forme, pour 1 proton.
PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane : signal entre 1.80 ppm et 1.70 ppm correspond à 2 protons.
motif Ethylène en intégrant la totalité des signaux aliphatiques (de ~ 0.5 à 3 ppm) et en soustrayant la contribution de tous les autres motifs aliphatiques (PB1-4, PB1-2, cycle EBR, farnesène forme A et C).

La quantification de la microstructure est réalisée en pourcentage molaire (% molaire) comme suit :

$$\% \text{ molaire d'un motif} = \text{intégrale } ^{1}\text{H d'un motif} * 100 / \Sigma \text{ (intégrales } ^{1}\text{H de chaque motif)}$$

3) Détermination de la température de transition vitreuse des polymères :

La température de transition vitreuse est mesurée au moyen d'un calorimètre différentiel ("Differential Scanning Calorimeter") selon la norme ASTM D3418 (1999).

4) Détermination de la rigidité des polymères (à cru):

Les mesures sont réalisées sur un rhéomètre Anton Paar modèle MCR301 en mode Cisaillement avec des éprouvettes cylindriques de géométrie maitrisée (épaisseur comprise entre 1,5mm et 3mm et diamètre compris entre

22mm et 28mm). L'échantillon est soumis à une sollicitation sinusoïdale en cisaillement, à une température fixe (correspondant à la fin du passage de la transition vitreuse de l'élastomère sur un balayage en température à 10Hz), et sur une plage fréquentielle allant de 0.01Hz à 100Hz. La valeur de rigidité retenue comme étant la rigidité du plateau caoutchoutique de l'échantillon est la valeur du module de cisaillement G' pour la fréquence à laquelle le module de perte G" atteint son minimum, conformément à la méthode décrite par C. Liu, J. He, E. van Ruymbeke, R. Keunings, C. Bailly, Evaluation of different methods for the determination of the plateau modulus and the entanglement molecular weight, Polymer 47 (2006) 4461-4479.

5) Détermination du taux de cristallinité des polymères :

La norme ISO 11357-3 :2011 est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Handbook of Polymer 4th Edition, J. BRANDRUP, E. H. IMMERGUT, and E. A. GRULKE, 1999)

6) Synthèse des polymères :

Dans la synthèse des terpolymères conformes à l'invention, le premier 1,3-diène utilisé est le 1,3-butadiène, le deuxième 1,3-diène est le myrcène ou le β-farnésène. Le myrcène est un 1,3-diène de formule (I) dans lequel R est un groupe hydrocarboné ayant 6 atomes de carbone de formule $CH_2$-$CH_2$-CH=$CMe_2$.

Tous les réactifs sont obtenus commercialement excepté les métallocènes [{$Me_2SiFlu_2Nd(\mu$-$BH_4)_2Li(THF)$}] et [$Me_2SiCpFluNd(\mu$-$BH_4)_2Li(THF)$] qui sont préparés selon les modes opératoires décrit dans les demandes de brevet WO 2007054224 et WO 2007054223.

Le butyloctylmagnésium BOMAG (20% dans l'heptane, C = 0,88 mol $L^{-1}$) provient de Chemtura et est stocké dans un tube de Schlenk sous atmosphère inerte. L'éthylène, de qualité N35, provient de la société Air Liquide et est utilisé sans purification préalable. Le myrcène (pureté ≥95%) est obtenu chez Sigma-Aldrich.

Exemple 1 non conforme à l'invention : synthèse d'un copolymère d'éthylène et de 1,3-butadiène

Le polymère est synthétisé selon le mode opératoire suivant :
Dans un réacteur en verre de 500 ml contenant 300 ml de toluène, on ajoute le co-catalyseur, le butyloctylmagnésium (BOMAG) puis le métallocène [$Me_2SiCpFluNd(\mu$-$BH_4)_2Li(THF)$]. La durée d'alkylation est de 10 minutes, la température de réaction est de 20 °C. Les quantités respectives des constituants du système catalytique figurent dans le tableau 3. Ensuite, les monomères sont ajoutés selon les proportions respectives indiquées dans le tableau 3, l'éthylène (Eth) et le 1,3-butadiène (Bde) étant sous la forme d'un mélange gazeux. La polymérisation est conduite à 80°C et à une pression d'éthylène constante de 4 bars.

La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante.

Exemple 2 non conforme à l'invention : synthèse d'un copolymère d'éthylène et de 1,3-butadiène

Le polymère est synthétisé selon le mode opératoire suivant :
Dans un réacteur en verre de 500 ml contenant 300 ml de méthylcyclohexane, on ajoute le co-catalyseur, le butyloctylmagnésium (BOMAG) puis le métallocène [$Me_2Si(Flu)_2Nd(\mu$-$BH_4)_2Li(THF)$]. La durée d'alkylation est de 10 minutes, la température de réaction est de 20 °C. Les quantités respectives des constituants du système catalytique figurent dans le tableau 3. Ensuite, les monomères sont ajoutés selon les proportions respectives indiquées dans le tableau 3, l'éthylène (Eth) et le 1,3-butadiène (Bde) étant sous la forme d'un mélange gazeux. La polymérisation est conduite à 80°C et à une pression d'éthylène constante de 4 bars.

La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante.

Exemple 3 non conforme à l'invention : synthèse d'un copolymère d'éthylène et de 1,3-butadiène

Le polymère est synthétisé selon le mode opératoire suivant :
Dans un réacteur contenant du méthylcyclohexane, on ajoute le co-catalyseur, le butyloctylmagnésium (BOMAG) puis le métallocène [$Me_2Si(Flu)_2Nd(\mu$-$BH_4)_2Li(THF)$]. La durée d'alkylation est de 10 minutes, la température de réaction est de

20 °C. Les quantités respectives des constituants du système catalytique figurent dans le tableau 3.

Ensuite, les monomères sont ajoutés de manière continue selon les quantités respectives indiquées dans le tableau 3. La polymérisation est conduite à 80°C et à pression constante de 4 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Exemples 4 à 10 conformes à l'invention : terpolymères d'éthylène, de 1,3-butadiène et de myrcène ou de β-farnésène

Les polymères sont synthétisés selon le mode opératoire suivant :
Dans un réacteur contenant le solvant hydrocarboné : méthylcyclohexane (MCH), on ajoute le co-catalyseur, le butyloctylmagnésium (BOMAG) puis le métallocène $[Me_2Si(Flu)_2Nd(\mu\text{-}BH_4)_2Li(THF)]$ La durée d'alkylation est de 10 minutes, la température de réaction est de 20 °C.

La polymérisation est conduite à 80°C et à une pression constante de 4 bars dans un réacteur en verre de 500 ml contenant 300 ml de solvant de polymérisation, le méthylcyclohexane, le système catalytique et les monomères, le myrcène (Myr) ou le β-farnésène (Far) étant introduit sous forme liquide dans le réacteur et l'éthylène/1,3-butadiène étant introduits sous forme gazeux. La réaction de polymérisation est stoppée par refroidissement et dégazage du réacteur. Le copolymère est récupéré par précipitation dans du méthanol, puis séché ou par séchage direct.

Les quantités respectives des constituants du système catalytique, la composition du mélange gazeux en éthylène et en 1,3-butadiène dans l'alimentation et la quantité de myrcène ou de β-farnésène figurent dans le tableau 4.

7) Résultats :

Les caractéristiques des polymères synthétisés figurent dans les tableaux 5 et 6.

Les élastomères des exemples 4 à 9 ont un taux de cristallinité bien plus faible que l'élastomère de l'exemple 1, même s'ils présentent un taux d'unité éthylène comparable ou bien supérieur. Même les élastomères des exemples 7 et 10 qui ont un taux d'unité éthylène supérieur à 80% présentent un taux de cristallinité bien plus faible que l'élastomère de l'exemple 1 pourtant bien moins riche en unité éthylène.

La comparaison des exemples 4, 6 et 8 avec l'exemple 2 montre par ailleurs que l'insertion d'unités du deuxième 1,3-diène dans le polymère à des taux conformes à l'invention permet de diminuer la rigidité du polymère, alors que les taux d'unité éthylène sont comparables. La comparaison des exemples 5 et 9 avec l'exemple 2 montre par ailleurs que l'insertion d'unités du deuxième 1,3-diène à des taux aussi faibles que 1% permet de diminuer la rigidité de l'élastomère, quand bien même les élastomères des exemples 5 et 9 ont un taux d'unités éthylène aussi élevé que celui de l'exemple 2. Les élastomères des exemples 5 et 9 ont aussi un taux de cristallinité inférieur à celui de l'élastomère de l'exemple 3 qui présente un taux d'unité éthylène semblable.

La présence dans un copolymère diénique riche en éthylène d'unités d'un 1,3-diène de formule (I) dans les taux conformes à l'invention permet d'améliorer le compromis entre le taux d'unités éthylène dans le polymère, le taux de cristallinité et la rigidité du polymère.

Tableau 3

| Ex | Métallocène (mmol/L) | Agent alkylant (mmol/L) | Composition mélange gazeux (%mol Eth/Bde) |
|---|---|---|---|
| 1 | 0.32 | 0.97 | 80/20 |
| 2 | 0.16 | 0.78 | 70/30 |
| 3 | 0.15 | 0.75 | 80/20 |

Tableau 4

| Ex | Métallocène (mmol/L) | Agent alkylant (mmol/L) | Composition mélange gazeux (% mol Eth/Bde) | Volume de Myr (ml) | Volume de Far (ml) | Mn (g/mol) | Ip |
|---|---|---|---|---|---|---|---|
| 4 | 0.00015 | 0.00047 | 80/20 | 5 | | 92500 | 1.7 |
| 5 | 0.00015 | 0.00047 | 80/20 | 1 | | 105200 | 1.7 |
| 6 | 0.00015 | 0.00047 | 80/20 | 10 | | 112900 | 2.0 |
| 7 | 0.00015 | 0.00047 | 90/10 | 5 | | - | - |

(suite)

| Ex | Métallocène (mmol/L) | Agent alkylant (mmol/L) | Composition mélange gazeux (% mol Eth/Bde) | Volume de Myr (ml) | Volume de Far (ml) | Mn (g/mol) | Ip |
|---|---|---|---|---|---|---|---|
| 8 | 0.00015 | 0.00047 | 80/20 | | 5 | 103300 | 1.8 |
| 9 | 0.00015 | 0.00047 | 80/20 | | 1 | 94000 | 1.6 |
| 10 | 0.00015 | 0.00047 | 90/10 | | 3 | - | - |

Tableau 5

| Ex | Unité Eth (% mol) | Unité du Bde (%mol) | Motif 1,2-cyclohexanediyle (%mol) | Tg (°C) | Cristallinité (%) | Rigidité à cru (MPa) |
|---|---|---|---|---|---|---|
| 1 | 73.5 | 26.5 | | -54 | 31 | - |
| 2 | 71 | 16 | 13 | -35 | 0 | 1 |
| 3 | 76.7 | 11.4 | 11.9 | -38 | 2.1 | - |

Tableau 6

| Ex | Unité Eth (%mol) | Unité du Bde (% mol) | Unité du Myr (% mol) | Unité du Far (% mol) | Motif 1,2-cyclohexane diyle (%mol) | Tg (°C) | Cristallinité (%) | Rigidité à cru (MPa) |
|---|---|---|---|---|---|---|---|---|
| 4 | 70 | 12 | 7 | | 11 | -47 | 0% | 0.8 |
| 5 | 75 | 12 | 1 | | 12 | -39 | 0.7% | 0.9 |
| 6 | 71 | 11 | 9 | | 9 | -48 | 0% | 0.7 |
| 7 | 82 | 5 | 6 | | 7 | -47 | 10.9% | - |
| 8 | 72 | 12 | | 5 | 11 | -49 | 0.6% | 0.8 |
| 9 | 74 | 13 | | 1 | 12 | -39 | 0% | 0.9 |
| 10 | 85 | 5 | | 3 | 7 | -44 | 14.9% | - |

## Revendications

1. Terpolymère d'éthylène, d'un premier 1,3-diène ayant 4 à 6 atomes de carbone et d'un deuxième 1,3-diène de formule (I), lequel terpolymère contient plus de 50% en mole d'unités éthylène et au moins 1% en mole d'unités du deuxième 1,3-diène,

$$CH_2=CR-CH=CH_2 \qquad (I)$$

le symbole R représentant une chaîne hydrocarbonée ayant 3 à 20 atomes de carbone.

2. Terpolymère selon la revendication 1, lequel terpolymère contient plus de 60% en mole d'unités éthylène, préférentiellement au moins 70% en moles d'unités éthylène.

3. Terpolymère selon la revendication 1 ou 2, lequel terpolymère contient au plus 90% en mole d'unités éthylène, de préférence au plus 85% en mole d'unités éthylène.

4. Terpolymère selon l'une quelconque des revendications 1 à 3, lequel terpolymère contient au plus 20% en mole d'unité du deuxième 1,3-diène, préférentiellement au plus 10% en mole d'unité du deuxième 1,3-diène de formule (I).

5. Terpolymère selon les revendications 2, 3 et 4, lequel terpolymère contient moins de 30% en mole d'unité du premier 1,3-diène ou moins de 20% en mole d'unité du premier 1,3-diène.

6. Terpolymère selon l'une quelconque des revendications 1 à 5, lequel terpolymère contient moins de 80% en mole d'unité éthylène, préférentiellement au plus 75% en mole d'unité éthylène.

7. Terpolymère selon l'une quelconque des revendications 1 à 6 dans lequel le premier 1,3-diène est le 1,3-butadiène ou l'isoprène.

8. Terpolymère selon l'une quelconque des revendications 1 à 7 lequel terpolymère contient en outre des unités de motif 1,2-cyclohexanediyle et dans lequel le premier 1,3-diène est le 1,3-butadiène ou un mélange de premiers 1,3-diènes dont un est le 1,3-butadiène.

9. Terpolymère selon l'une quelconque des revendications 1 à 8 dans lequel le symbole R représente une chaîne hydrocarbonée ayant 6 à 16 atomes de carbone, préférentiellement une chaîne acyclique.

10. Terpolymère selon l'une quelconque des revendications 1 à 9 dans lequel le deuxième 1,3-diène est le myrcène ou le β-farnésène.

11. Terpolymère selon l'une quelconque des revendications 1 à 10, lequel terpolymère est un terpolymère statistique.

12. Terpolymère selon l'une quelconque des revendications 1 à 11, lequel terpolymère porte une fonction amine, alcoxysilane ou silanol.

13. Composition de caoutchouc qui comprend au moins un terpolymère défini selon l'une quelconque des revendications 1 à 12, une charge renforçante et un système de réticulation, lequel terpolymère est un élastomère.

14. Pneumatique qui comprend une composition de caoutchouc définie selon la revendication 13.

15. Procédé pour préparer le terpolymère selon l'une quelconque des revendications 1 à 13 qui comprend la polymérisation d'un mélange d'éthylène, du premier 1,3-diène et du deuxième 1,3-diène en présence d'un système catalytique à base au moins d'un métallocène de formule (II) et d'un organomagnésien

$$P(Cp^1Cp^2)\ Nd(BH_4)_{(1+y)}\text{-}L_y\text{-}N_x \qquad (II)$$

$$MgR^1R^2 \qquad (III)$$

$Cp^1$ et $Cp^2$, identiques ou différents, étant choisis dans le groupe constitué par le groupe cyclopentadiényle de formule $C_5H_4$ , le groupe fluorényle non substitué de formule $C_{13}H_8$ et les groupes fluorényles substitués,
P étant un groupe pontant les deux groupes $Cp^1$ et $Cp^2$ et représentant un groupe $ZR^3R^4$, Z représentant un atome de silicium ou de carbone, $R^3$ et $R^4$, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne, $R^1$ et $R^2$, identiques ou différents, représentant un groupe carboné.

## Patentansprüche

1. Terpolymer von Ethylen, einem ersten 1,3-Dien mit 4 bis 6 Kohlenstoffatomen und einem zweiten 1,3-Dien der Formel (I), wobei das Terpolymer mehr als 50 Mol-% Ethyleneinheiten und mindestens 1 Mol-% Einheiten des zweiten 1,3-Diens enthält,

$$CH_2{=}CR\text{-}CH{=}CH_2 \qquad (I)$$

wobei das Symbol R für eine Kohlenwasserstoffkette mit 3 bis 20 Kohlenstoffatomen steht.

2. Terpolymer nach Anspruch 1, wobei das Terpolymer mehr als 60 Mol-% Ethyleneinheiten und bevorzugt mindestens 70 Mol-% Ethyleneinheiten enthält.

3. Terpolymer nach Anspruch 1 oder 2, wobei das Terpolymer höchstens 90 Mol-% Ethyleneinheiten und vorzugsweise höchstens 85 Mol-% Ethyleneinheiten enthält.

4. Terpolymer nach einem der Ansprüche 1 bis 3, wobei das Terpolymer höchstens 20 Mol-% Einheiten des zweiten 1,3-Diens und bevorzugt höchstens 10 Mol-% Einheiten des zweiten 1,3-Diens der Formel (I) enthält.

5. Terpolymer nach einem der Ansprüche 2, 3 und 4, wobei das Terpolymer weniger als 30 Mol-% Einheiten des ersten 1,3-Diens oder weniger als 20 Mol-% Einheiten des ersten 1,3-Diens enthält.

6. Terpolymer nach einem der Ansprüche 1 bis 5, wobei das Terpolymer weniger als 80 Mol-% Ethyleneinheiten und bevorzugt höchstens 75 Mol-% Ethyleneinheiten enthält.

7. Terpolymer nach einem der Ansprüche 1 bis 6, wobei es sich bei dem ersten 1,3-Dien um 1,3-Butadien oder Isopren handelt.

8. Terpolymer nach einem der Ansprüche 1 bis 7, wobei das Terpolymer außerdem Einheiten des 1,2-Cyclohexandiylmotivs enthält und wobei es sich bei dem ersten 1,3-Dien um 1,3-Butadien oder eine Mischung von ersten 1,3-Dienen, von denen eines 1,3-Butadien ist, handelt.

9. Terpolymer nach einem der Ansprüche 1 bis 8, wobei das Symbol R für eine Kohlenwasserstoffkette mit 6 bis 16 Kohlenstoffatomen, bevorzugt eine acyclische Kette, steht.

10. Terpolymer nach einem der Ansprüche 1 bis 9, wobei es sich bei dem zweiten 1,3-Dien um Myrcen oder β-Farnesen handelt.

11. Terpolymer nach einem der Ansprüche 1 bis 10, wobei es sich bei dem Terpolymer um ein statistisches Terpolymer handelt.

12. Terpolymer nach einem der Ansprüche 1 bis 11, wobei das Terpolymer eine Amin-, Alkoxysilan- oder Silanolfunktion trägt.

13. Kautschukzusammensetzung, die mindestens ein Terpolymer gemäß einem der Ansprüche 1 bis 12, einen verstärkenden Füllstoff und ein Vernetzungssystem umfasst, wobei es sich bei dem Terpolymer um ein Elastomer handelt.

14. Reifen, der eine Kautschukzusammensetzung gemäß Anspruch 13 umfasst.

15. Verfahren zur Herstellung des Terpolymers nach einem der Ansprüche 1 bis 13, das die Polymerisation einer Mischung von Ethylen, dem ersten 1,3-Dien und dem zweiten 1,3-Dien in Gegenwart eines katalytischen Systems auf Basis von mindestens einem Metallocen der Formel (II) und einer Organomagnesiumverbindung umfasst,

$$P(Cp^1Cp^2)\ Nd(BH_4)_{(1+y)}\text{-}L_y\text{-}N_x \qquad (II)$$

$$MgR^1R^2 \qquad (III)$$

wobei $Cp^1$ und $Cp^2$ gleich oder verschieden sind und aus der Gruppe bestehend aus der Cyclopentadienylgruppe der Formel $C_5H_4$, der unsubstituierten Fluorenylgruppe der Formel $C_{13}H_8$ und substituierten Fluorenylgruppen ausgewählt sind,
wobei P eine die beiden Gruppen $Cp^1$ und $Cp^2$ verbrückende Gruppe ist und für eine Gruppe $ZR^3R^4$ steht, wobei Z für ein Silicium- oder Kohlenstoffatom steht und $R^3$ und $R^4$ gleich oder verschieden sind und jeweils für eine Alkylgruppe mit 1 bis 20 Kohlenstoffatomen, vorzugsweise ein Methyl, stehen,
wobei y ganzzahlig ist und gleich oder größer als 0 ist, wobei x ganzzahlig oder nicht ganzzahlig ist und gleich oder größer als 0 ist,

wobei L für ein Alkalimetall, das aus der Gruppe bestehend aus Lithium, Natrium und Kalium ausgewählt ist, steht, wobei N für ein Molekül eines Ethers, vorzugsweise Diethylether oder Tetrahydrofuran, steht, wobei $R^1$ und $R^2$ gleich oder verschieden sind und für eine Kohlenstoffgruppe stehen.

## Claims

**1.** Terpolymer of ethylene, of a first 1,3-diene having from 4 to 6 carbon atoms and of a second 1,3-diene of formula (I), which terpolymer contains more than 50 mol% of ethylene units and at least 1 mol% of units of the second 1,3-diene,

$$CH_2=CR\text{-}CH=CH_2 \qquad (I)$$

the symbol R representing a hydrocarbon chain having from 3 to 20 carbon atoms.

**2.** Terpolymer according to Claim 1, which terpolymer contains more than 60 mol% of ethylene units, preferentially at least 70 mol% of ethylene units.

**3.** Terpolymer according to Claim 1 or 2, which terpolymer contains at most 90 mol% of ethylene units, preferably at most 85 mol% of ethylene units.

**4.** Terpolymer according to any one of Claims 1 to 3, which terpolymer contains at most 20 mol% of unit of the second 1,3-diene, preferentially at most 10 mol% of unit of the second 1,3-diene of formula (I).

**5.** Terpolymer according to Claims 2, 3 and 4, which terpolymer contains less than 30 mol% of unit of the first 1,3-diene or less than 20 mol% of unit of the first 1,3-diene.

**6.** Terpolymer according to any one of Claims 1 to 5, which terpolymer contains less than 80 mol% of ethylene unit, preferably at most 75 mol% of ethylene unit.

**7.** Terpolymer according to any one of Claims 1 to 6, in which the first 1,3-diene is 1,3-butadiene or isoprene.

**8.** Terpolymer according to any one of Claims 1 to 7, which terpolymer additionally contains units of 1,2-cyclohexanediyl motif and in which the first 1,3-diene is 1,3-butadiene or a mixture of first 1,3-dienes, one of which is 1,3-butadiene.

**9.** Terpolymer according to any one of Claims 1 to 8, in which the symbol R represents a hydrocarbon chain having from 6 to 16 carbon atoms, preferably an acyclic chain.

**10.** Terpolymer according to any one of Claims 1 to 9, in which the second 1,3-diene is myrcene or β-farnesene.

**11.** Terpolymer according to any one of Claims 1 to 10, which terpolymer is a statistical terpolymer.

**12.** Terpolymer according to any one of Claims 1 to 11, which terpolymer bears an amine, alkoxysilane or silanol functional group.

**13.** Rubber composition which comprises at least one terpolymer defined according to any one of Claims 1 to 12, a reinforcing filler and a crosslinking system, which terpolymer is an elastomer.

**14.** Tyre which comprises a rubber composition defined according to Claim 13.

**15.** Process for preparing the terpolymer according to any one of Claims 1 to 13, which comprises the polymerization of a mixture of ethylene, of the first 1,3-diene and of the second 1,3-diene in the presence of a catalytic system based at least on a metallocene of formula (II) and on an organomagnesium compound

$$P(Cp^1Cp^2)\ Nd(BH_4)_{(1+y)}\text{-}L_y\text{-}N_x \qquad (II)$$

$$MgR^1R^2 \qquad (III)$$

$Cp^1$ and $Cp^2$, which are identical or different, being selected from the group consisting of the cyclopentadienyl group of formula $C_5H_4$, the unsubstituted fluorenyl group of formula $C_{13}H_8$ and substituted fluorenyl groups,
P being a group bridging the two $Cp^1$ and $Cp^2$ groups and representing a $ZR^3R^4$ group, Z representing a silicon or carbon atom, $R^3$ and $R^4$, which are identical or different, each representing an alkyl group comprising from 1 to 20 carbon atoms, preferably a methyl,
y, which is an integer, being equal to or greater than 0,
x, which is or is not an integer, being equal to or greater than 0,
L representing an alkali metal selected from the group consisting of lithium, sodium and potassium,
N representing a molecule of an ether, preferably diethyl ether or tetrahydrofuran,
$R^1$ and $R^2$, which are identical or different, representing a carbon group.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2007054223 A
- WO 2007054224 A
- WO 2017093654 A1
- WO 2018020122 A1


### Littérature non-brevet citée dans la description


- **S.GEORGES** ; **M.BRIA** ; **P. ZINCK** ; **M. VISSEAUX**. *Polymer*, 2014, vol. 55, 3869-3878
- **C. LIU** ; **J. HE** ; **E. VAN RUYMBEKE** ; **R. KEUNINGS** ; **C. BAILLY**. Evaluation of different methods for the determination of the plateau modulus and the entanglement molecular weight. *Polymer*, 2006, vol. 47, 4461-4479
- **J. BRANDRUP** ; **E. H. IMMERGUT** ; **E. A. GRULKE**. Handbook of Polymer. 1999